**Europäisches Patentamt**

**European Patent Office**

**Office européen des brevets**

(19)

(11) Veröffentlichungsnummer: **0 621 464 A1**

## (12) EUROPÄISCHE PATENTANMELDUNG

(21) Anmeldenummer: **94105427.2**

(22) Anmeldetag: **08.04.94**

(51) Int. Cl.$^5$: **G01F 15/06**

(30) Priorität: **20.04.93 DE 4312837**
**20.04.93 DE 4312841**

(43) Veröffentlichungstag der Anmeldung:
**26.10.94 Patentblatt 94/43**

(84) Benannte Vertragsstaaten:
**DE IT PT SE**

(71) Anmelder: **Peter Lancier**
**Maschinenbau-Hafenhütte GmbH & Co. KG**
**Petersheide 37**
**D-48167 Münster (DE)**

(72) Erfinder: **Vemmer, Helmut, Dipl.-Ing.**
**Ohlingerstrasse 1**
**42329 Wuppertal (DE)**
Erfinder: **Wernsmann, Alfons, Dipl.-Ing**
**Schagern 5**
**48612 Horstmar (DE)**
Erfinder: **Jahnk, Volker, Dipl.-Ing.**
**Kinderhauser Strasse 46**
**48149 Münster (DE)**

(74) Vertreter: **Hoffmeister, Helmut, Dr. Dipl.-Phys.**
**Patentanwalt**
**Goldstrasse 36**
**D-48147 Münster (DE)**

(54) **Vorrichtung zur Strömungsmessung in Druckluftanlagen, Strömungsmesseinrichtung und Anordnung zur Messwertübertragung zwischen Mikrobrückenluftstromsensoren und einer Überwachungseinheit hierfür.**

(57) Zur Messung der Strömung wird die Druckluft an zwei Drucklufteingänge (26.1.1, 26.1.2) geführt und über deren Druckluftausgänge (26.2.1, 26.2.n) an Anschlußeingänge (16) von Strömungsmeßeinrichtungen mit Mikrobrückenluftstromsensor (100.1, ... 100.n) mit gleichem Druck verteilt.

Nach der Messung ihrer Strömungsmenge in den Strömungsmeßeinrichtungen mit Mikrobrückenluftstromsensor (100.1, ... 100.n) steht die Druckluft an den mit ihren Anschlußausgängen (17) verbundenen Druckluftabgängen (25.1, ... 25.n) an.

Die Strömungsmeßeinrichtungen mit Mikrobrük-kenluftstromsensor (100.1, ... 100.n) sind über ein BUS-System (BUS) mit einer Überwachungseinheit (ÜE) verbunden, über die die Meßergebnisse der Strömungsmeßeinrichtungen mit Mikrobrückenluftstromsensor (100.1, ... 100.n) übertragbar sind.

Die Übertragung der Meßergebnisse erfolgt potentialfrei über eine Schnittstelle mit Potentialtrennung.

Die Meßergebnisse der Strömungsmeßeinrichtungen mit Mikrobrückenluftstromsensor sind mit einem Kontrollrechner mit einer zugeteilten Adresse abfragbar.

Fig. 2

Die Erfindung betrifft eine Vorrichtung zur Strömungsmessung in Druckluftanlagen, eine Meßeinrichtung hierfür, die aus einem Mikrobrückenluftstromsensor, zwei Anschlußbereichen und Strömungskanälen, durch die die Druckluft über die Anschlußbereiche hindurchströmt und mit Hilfe des Mikrobrückenluftstromsensors eine Strömungsmessung in Druckluftanlagen durchführbar ist, besteht und eine Anordnung zur Meßwertübertragung zwischen Mikrobrückenluftstromsensoren und einer Überwachungseinheit mit einem ersten Operationsverstärker, dessen Ausgangsstrom durch die Dioden eines ersten und eines zweiten Optokopplers an Masse geleitet ist und dessen invertierender Eingang am Emitter des Transistors des zweiten Optokopplers, dessen Kollektor an Potential geführt ist, an einem ersten an Masse liegenden Widerstand und an einem ersten Kondensator, der zu seinem Ausgang geführt ist, angeordnet ist.

Eine Vorrichtung zur Strömungsmessung ist aus der JP 58-100 710 (A) bekannt. Dabei wird Heizöl als Strömungsmedium an einen Eingang einer als Strömungsmediumverteilung ausgebildeten Strömungsmediumzuführung geführt und ist über Strömungsmediumabgangsleitungen verteilbar. An die Strömungsmittelabgangsleitungen sind Verteilungsmeßeinrichtungen und Thermometer angeschlossen, die mit einer Auswerteeinheit verbunden sind. An der Auswerteeinheit ist darüber hinaus ein Flußmeter angeschlossen, welches im Eingang der Strömungsmediumzufuhr angeordnet ist.

Feststellbar ist mit dieser aufwendigen Vorrichtung allerdings nur ein Zusammenhang zwischen einer einströmenden Gesamtmenge von Heizöl und dessen Verteilung in den einzelnen Strömungsmittelabgängen. Gemessen wird dabei die Flußmenge über den Differenzdruck, was zu ungenauen Messungen führen kann.

Aus der JP 1 127913 A ist eine Vorrichtung zur Strömungsmessung in Gasanlagen bekannt. Mit einer Überwachungseinheit wird hier durch Sensoren die Flußrate und der Druck von medizinischen Gasen gemessen und überwacht. Die gemessenen Daten werden über ein Bus-System zu der Überwachungseinheit übertragen.

Durch die Überwachungseinheit wird aber nur ein Alarm durch Warnlampen und eine Anzeige der Daten auf einem Display ermöglicht.

Eine Strömungsmessung in Druckluftanlagen wird durch Strömungsmeßeinrichtungen vorgenommen. Aus der EP-A-0 522 757 ist eine Strömungsmeßeinrichtung bekannt, die zwei Anschlußbereiche aufweist, durch die Luft einströmt und an einen Mikrobrückenluftstromsensor vorbeigeführt wird.

Nachteilig ist, daß zur Leitung und Führung der Luft ein System von Leiteinrichtungen und besonders ausgebildeten Kanälen erforderlich ist, um die Strömung zu laminarisieren. Trotz dieses hohen Aufwands kann durch äußere Einflüsse das Meßergebnis negativ beeinflußt werden, so daß ungenaue Messungen möglich sind.

Aus der US-A-90 956 ist eine Strömungsmeßeinrichtung bekannt, bei der in einer Rohrleitung ein Gasstromsensor, ein Druck- und ein Temperaturfühler angeordnet sind, die mit einem Volumenkorrekturgerät verbunden sind. Mit Hilfe eines Mikroprozessors wird durch einen Vergleich der von den Fühlern gemessenen Daten mit abgespeicherten Konstanten eine Korrektur der Meßwerte des Gasstromsensors vorgenommen.

Nachteilig ist, daß durch das Volumenkorrekturgerät nur die durch Temperatur- und Druckschwankungen bedingten Fehler korrigiert werden können. Eine besondere Erfassung und Umformung der Meßwerte für eine genaue Messung ist bei einer Strömungsmessung in Druckluftanlagen nicht möglich.

Weiterhin ist es bekannt, eine Strömungsmessung in Druckluftanlagen durch Strömungsmeßeinrichtungen vorzunehmen. Um die durch sie hindurchströmende Luft messen zu können, wird üblicherweise der Luftstrom über Anschlußbereiche durch eine Vielzahl von Kanälen geleitet, um die Strömung zu laminarisieren. Diese Strömungsmeßeinrichtungen sind zwischen einer Druckluftanlage und einem Verbraucher, z. B. einem druckluftgeschützten Kabel oder einer Leitung angeordnet. Nachteilig ist, daß der für eine Strömungsmessung vorzunehmende Aufwand groß ist und darüber hinaus die Überwachung der Verbraucher durch eine ungenaue Messung, die von der Wärmeentwicklung der Luft, vom Systemdruck und vom Druckverlust beeinflußt wird, ungenau ist.

Strömungsmeßeinrichtungen mit Mikrobrückenluftstromsensor, die sich in großer Entfernung zu einer Überwachungseinheit befinden, sind mit einem Bussystem verbindbar.

Aus der DE-A-40 24 002 ist ein NF-Übertrager mit galvanischer Trennung bekannt. Ein Frequenzsignal mit einer Frequenz von 300 - 3000 kHz wird von einem Operationsverstärker verstärkt und steuert zwei in Reihe liegende Fotodioden an, die ein dem NF-Signal entsprechendes Signal abgeben, das von zwei Fototransistoren empfangen und in ein elektrisches Signal umgewandelt wird. Am ersten Fototransistor steht das Ausgangssignal an. Das elektrische Signal des zweiten Transistors wird auf den invertierenden Eingang des Operationsverstärkers zurückgeführt und wirkt sich verstärkend auf die Kennlinie des NF-Übertragers aus.

Nachteilig ist, daß mit dem NF-Übertrager keine Übertragung der von weit entfernten Sensoren aufgenommenen Meßwerte zu einer Übertragungseinheit und damit keine genaue Meßung möglich ist. Durch die Fotodioden und Transistoren wird das Signal nur entkoppelt. Der Verstärker hat dabei lediglich die Aufgabe, durch seine gegenkoppelnde Wirkung die Kennlinie des NF-Übertragers zu linearisieren.

Weiterhin ist aus der DE-B-3 720 996 eine Schaltungsanordnung für einen potentialmäßig abgekoppelten Drehzahlregler beschrieben. Auf den invertierten Eingang eines Operationsverstärkers wird ein Vergleichswert eines Drehzahl-Soll- und eines Drehzahl-Ist-Wertes gegeben. Im Ausgangskreis des Operationsverstärkers sind zwei in Reihe geschaltete Luminiszenzdioden angeordnet. Ein Optokoppler dient der Signalübertragung, der andere wirkt mit seinem Fototransistor, der einen Arbeitswiderstand im Kollektorstrang hat, über einen Rückführweg, in den ein RC-Glied eingefügt ist, auf den invertierten Eingang des Verstärkers.

Auch diese Lösung eignet sich nicht für eine Übertragung von Meßwerten von weit entfernt angeordneten Sensoren zu einer Überwachungseinheit und ermöglicht damit keine genaue Messung, auch wenn eine Potentialtrennung vorgenommen wird. Die gegenkoppelnde Wirkung des Verstärkers dient hier lediglich der Linearisierung des Signals. Dabei wird das rückgeführte Steuersignal für einen die Regelcharakteristik bestimmende Aufbereitung verwendet.

Es ist auch bekannt, eine gemessene Spannung potentialfrei, elektrischisoliert auf einen Empfängerteil zu übertragen (Tietze, U., Schenk, Ch.: Halbleiter-Schaltungstechnik, Siebente, überarbeitete Auflage, Springer-Verl., 1985, S. 781 - 783). Dabei wird mit Optokopplern eine Gleichspannung direkt übertragen. Um den Linearitätsfehler der Optokoppler auszugleichen, wird mit Hilfe von Operationsverstärkern der Strom durch Leuchtdioden so geregelt, daß ein Photostrom gleich einem Sollwert ist. Eine Gegenkopplungsschleife wird dann über einen Referenzkoppler geschlossen. Da der Photostrom sein Vorzeichen nicht ändern kann, wird ein konstanter Anteil überlagert, um bipolare Eingangssignale verarbeiten zu können.

Herausgestellt werden hier nur ganz allgemein die Vorteile einer optischen Kopplung gegenüber einer induktiven, z.B. durch einen Transformator, so daß die so beschriebene potentialfreie Kopplung nicht einfach für eine Übertragung von Meßwerten zwischen Sensoren und einer Überwachungseinheit mit einem Bussystem übernehmbar ist, soll es nicht weiterhin zu einer Gefährdung der durch die Überwachungseinheit zu überwachenden Geräte und Einheiten in der Funktion kommen.

Der Erfindung liegt die Aufgabe zugrunde, eine Vorrichtung zur Strömungsmessung in Druckluftanlagen und hierfür eine Strömungsmeßeinrichtung und eine Anordnung zur Meßwertübertragung zwischen Mikrobrückenluftstromsensoren und einer Überwachungseinheit zu schaffen, die eine Senkung des Aufwandes und eine Erhöhung der Meßgenauigkeit ermöglicht.

Erfindungsgemäß wird die Aufgabe bei einer Vorrichtung zur Strömungsmessung in Druckluftanlagen gelöst durch die Merkmale des Anspruchs 1. Die erfindungsgemäße Strömungsmeßeinrichtung zur Lösung der gestellten Aufgabe ist durch die Merkmale des Anspruchs 6 definiert. Die erfindungsgemäße Anordnung zur Meßwertübertragung zwischen Mikrobrückenluftstromsensoren und einer Überwachungseinheit ist durch die Merkmale des Anspruchs 13 gekennzeichnet.

Die mit der Erfindung erzielten Vorteile bestehen insbesondere darin, daß die von einer Druckluftanlage erzeugte Luft zentral auf die Vorrichtung gegeben werden kann und in ihr durch die Druckluftverteilung über die Strömungsmeßeinrichtungen mit Mikrobrückenluftstromsensor an die Verbraucher gelangt. Hierdurch ist gewährleistet, daß die Verbraucher jeweils unter einem gleichen Druck stehen und Luft so nachströmen kann, daß die Funktionsfähigkeit der Verbraucher gewährleistet ist. Mit den Strömungsmeßeinrichtungen wird der Luftstrom, der in die Verbraucher geht, ständig gemessen und durch eine hohe Meßgenauigkeit eine gute Überwachungsmöglichkeit garantiert.

In weiterer Ausgestaltung der Erfindung sind die Meßergebnisse der Strömungsmeßeinrichtungen mit Mikrobrückenluftstromsensor mit einem Kontrollrechner mit einer zugeteilten Adresse abfragbar. Hierdurch ist ein genaues Abfragen der einzelnen Strömungsmeßeinrichtungen gesichert.

Vorteilhaft ist es, wenn die Adressen für Strömungsmeßeinrichtungen mit Mikrobrückenluftstromsensor in Steckplätzen fest eingegeben sind. Werden die Strömungsmeßeinrichtungen innerhalb der Steckplätze vertauscht, ist gesichert, daß die zu einem Luftverbraucher gehörige Strömungsmeßeinrichtung abgefragt wird. Hierdurch wird der Aufwand der für eine Umcodierung notwendig ist, gesenkt und die Meßsicherheit und Überwachung der einzelnen Verbraucher wesentlich erhöht.

Vorteilhaft ist es, wenn die Anschlüsse der Strömungsmeßeinrichtungen durch die Rückwand des Bussystems geführt sind. Vorteilhaft ist es darüber hinaus, daß jedem BUS eine Adreßcodierung für eine Kaskadierung von 1 bis 8 einstellbar zugeordnet ist.

Die mit der erfindungsgemäßen Strömungseinrichtung erzielten Vorteile bestehen insbesondere darin, daß

- der Sensor mit dem Mikroprozessor die Meßwerte so korrigiert, daß ein einfacher mechanischer Bypaß ohne laminare Kanäle einsetzbar ist,
- eine Wärmeentwicklung der Luft vernachlässigbar,
- eine kurze Ansprechgeschwindigkeit, vorzugsweise von $\leq$ 5 ms, gegeben,

- eine lange störungsfreie Lebensdauer garantiert,
- eine hohe Meßgenauigkeit unabhängig vom Systemdruck gegeben,
- ein sehr geringer Druckverlust, der vorzugsweise ≤ 5 mbar beträgt, vorhanden und
- eine hohe Unempfindlichkeit gegenüber extremen Bereichsüberschreitungen beim Füllen von Verbrauchern, insbesondere Kabeln bzw. Leitungen mit Luft, gegeben ist. Das ist insbesondere durch die besondere Einbindung des Mikrobrückenluftstromsensors in die Rohrverbindungsstücke und den parallel angeordneten Rohrbypaß, die durch Rohrverteilungsstücke verbunden sind, gegeben. Insbesondere die Mikrorechnereinheit sorgt dann dafür, daß die Meßwerte genauestens ermittelt werden.

Vorteilhaft ist es, daß der Spannungs-Zeit-Wandler aus einem von der Mikrorechnereinheit startbaren Integrator und einem mit ihm verbundenen Komparator besteht, womit die vom Mikrobrückenluftstromsensor abgegebene Spannung wie folgt umwandelbar ist:

- nach dem Starten steigt die Ausgangsspannung des Integrators an und erzeugt eine Rampenspannung,
- der Komparator vergleicht die Rampenspannung mit der Sensorspannung und kippt, wenn die Rampenspannung größer als die Sensorspannung ist,
- so daß sich ein proportionales Verhältnis zwischen der Sensorspannung und einem Zeitfenster ergibt, welches mit dem Starten des Integrators beginnt und dem Kippen des Komparators endet.

Vorteilhaft ist es, wenn an der Mikrorechnereinheit eine Speichereinheit, in der die Korrekturkoeffizienten abgespeichert sind, angeordnet ist. Diese Speichereinheit kann als elektrisch programmierbare Speichereinheit (EEPROM) ausgebildet sein. Selbstverständlich ist es auch möglich, die Korrekturkoeffizienten in der Mikrorechnereinheit selbst zu speichern. In der Mikrorechnereinheit sind die Programmabläufe und Korrekturpolynome in einem Festwertspeicher abgelegt.

Vorteilhaft ist es, wenn mit der Mikrorechnereinheit eine Meldeeinheit verbunden ist. Diese Meldeeinheit enthält

- eine dreistellige LCD-Anzeige,
- ein Alarmtastenfeld und
- eine Alarmanzeige.

Hierdurch ist es möglich, auftretende Fehler bereits an jeder Strömungsmeßeinrichtung direkt anzuzeigen und bestimmte Grenzwerte einzuspeichern.

Vorteilhaft ist es, wenn die Luftverteilungsstücke als F-Tüllen ausgebildet sind. Durch die F-Tüllen ist gewährleistet, daß die einströmende Luft direkt auf die einzelnen Rohrverbindungen gegeben wird, durch diese hindurchfließen kann und an der gegenüberliegenden F-Tülle einmündet und abgeleitet wird.

Vorteilhaft ist es, wenn der Spannungs-Zeit-Wandler, die Mikrorechnereinheit, die Schnittstelle mit Potentialtrennung und die Speichereinheit auf einer Sensorplatine zusammengefaßt und angeordnet sind. Damit ist eine räumlich sehr günstige und vor allem für einen Gebrauch sehr günstige Zusammenfassung der einzelnen Elemente gegeben.

In weiterer Ausgestaltung der erfindungsgemäßen Anordnung zur Meßwertübertragung zwischen Mikrobrückenluftstromsensoren und einer Überwachungseinheit befinden sich vier Optokoppler in einem integrieten Schaltkreis.

Vorteilhaft ist es dabei, wenn zwischen dem Ausgang des ersten Operationsverstärkers und dem Eingang der Diode des ersten Optokopplers ein vierter Widerstand angeordnet ist.

Vorteilhaft ist es, wenn zwischen dem Ausgang und dem invertierten Eingang des ersten Operationsverstärkers ein zweiter Kondensator angeordnet ist.

Weiterhin ist es vorteilhaft, wenn an der SYNC-Leitung ein an Masse liegender zweiter Kondensator und ein an Potential liegender fünfter Widerstand angeordnet ist.

Vorteilhaft ist es, wenn das Tiefpaßfilter aus einem zweiten Operationsverstärker, einem sechsten und einem siebenten Widerstand und einem dritten und vierten Kondensator besteht, wobei

- der sechste und der siebente Widerstand in der PWM-Leitung am ersten Anschluß,
- der dritte Kondensator zwischen den beiden Widerständen und dem zweiten Anschluß und
- der vierte Kondensator am ersten Anschluß des zweiten Operationsverstärkers liegt,

wobei der zweite Anschluß zum Ausgang des zweiten Operationsverstärkers führt, der mit dem vor dem ersten Anschluß des ersten Operationsverstärkers liegenden vierten Widerstand verbunden ist.

Vorteilhaft ist es, wenn der Mikrobrückenluftstromsensor ein abgewandeltes Hitzdraht-Anemometer ist, wobei im Strömungsrohr jeweils ein Permalloy-Widerstand vor und hinter einem Heizelement angeordnet und zu einer Meßbrücke verschaltet ist. Hierdurch wird eine sehr genaue Meßwertaufnahme gesichert. Im Gegensatz zu herkömmlichen Aufnehmern mit Wärmetransport im Luftstrom, die eine Heizleistung von 3 - 4 Watt je Meßelement benötigen, schafft dieser Sensor mit einer Heizleistung von nur 10 Milliwatt eine Mikrobrückentemperatur, die um 160° über der Chiptemperatur liegt.

Vorteilhafterweise ist dabei die Mikrorechnereinrichtung die Mirkorechnereinheit und die Anordnung zur Meßwertübertragung zwischen Mikrobrückenluftstromsensoren und einer Überwachungseinheit die Schnittstelle mit Potentialtrennung. Hierdurch erfolgt eine sehr genaue und sichere Übertragung der Meßwerte von der Meßstelle zur Überwachungseinheit. Durch die Übernahme sämtlicher Funktionen von einer Mikrorechnereinheit wird dieses abgestimmte Verhalten sehr vorteilhaft gesteuert.

Vorteilhaft ist es, wenn in der Vorrichtung zur Strömungsmessung und in der Strömungsmeßeinrichtung ein Zwei-Draht-Bussystem eingesetzt ist. Dieses Bussystem eignet sich ausgezeichnet für die innerhalb des Systems zu übertragenden Signale. Anhand einer Zeichnung wird die Erfindung näher erläutert. Es zeigen jeweils in schematischer Darstellung

Fig. 1    eine Baugruppe von Strömungsmeßeinrichtungen in einer Vorderansicht,

Fig. 2    eine Baugruppe gemäß Fig. 1 von hinten gesehen,

Fig. 3    eine Baugruppe gemäß Fig. 1 in einer Draufsicht,

Fig. 4    ein Blockschaltbild einer Strömungsmeßeinrichtung,

Fig. 5    eine Strömungsmeßeinrichtung als Einschubmodul in einer Seitenansicht,

Fig. 6    eine Strömungsmeßeinrichtung gemäß Fig. 5 in einer Draufsicht,

Fig. 7    eine Strömungsmeßeinrichtung gemäß Fig. 5 in einer Frontansicht und

Fig. 8    eine Anordnung zur Meßwertübertragung zwischen einem Mikrobrückenluftstromsensor und einer Übertragungseinheit.

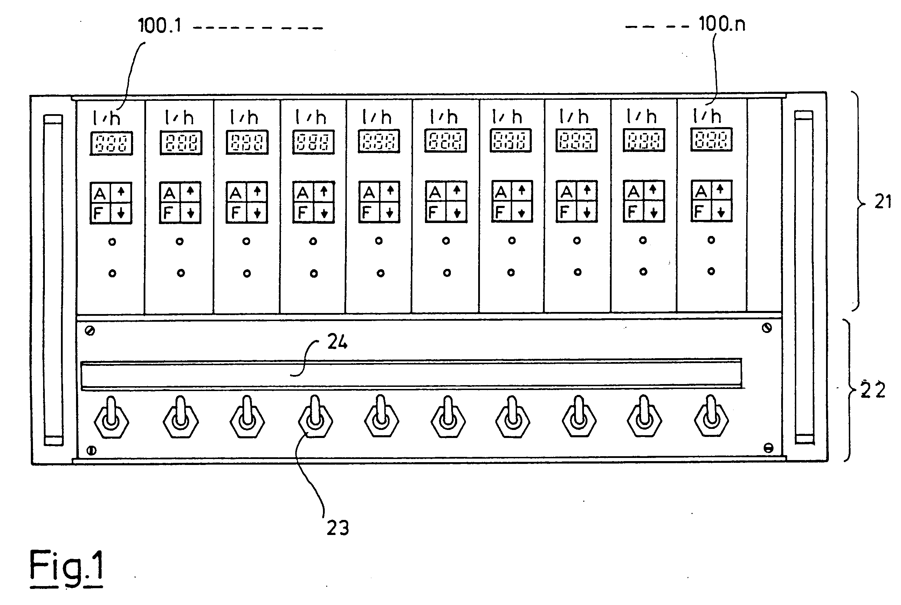

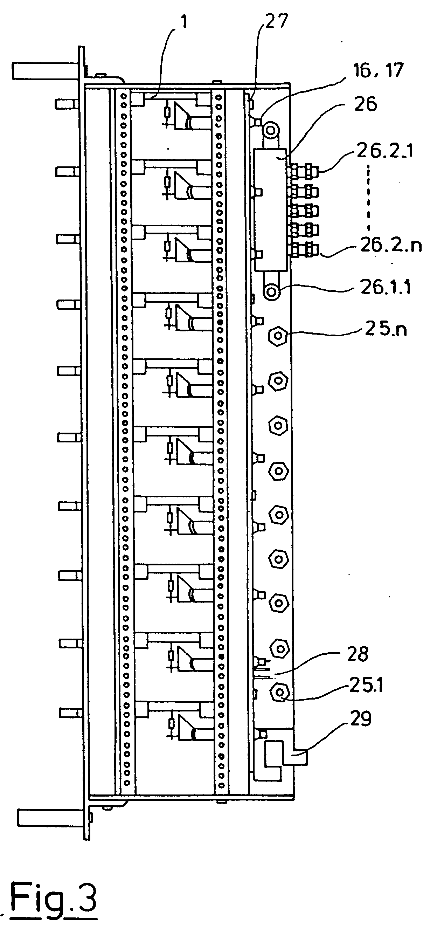

Eine Baugruppe von Strömungsmeßeinrichtungen besteht, wie insbesondere in den Figuren 1 bis 3 dargestellt, aus einem Einschubteil 21 und einem Pneumatikteil 22. In das Einschubteil 21 sind Strömungsmeßeinrichtungen 100.1, ... 100.n einschiebbar.

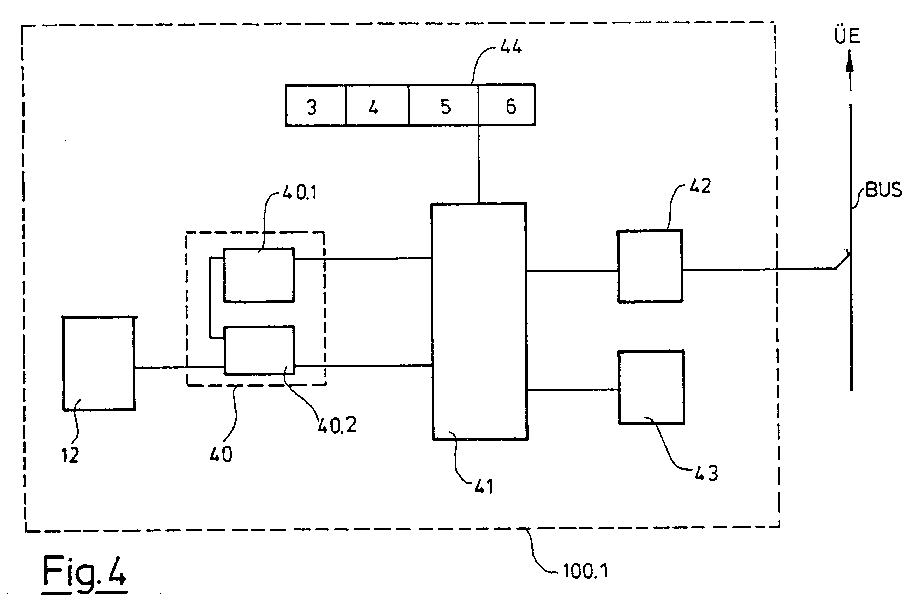

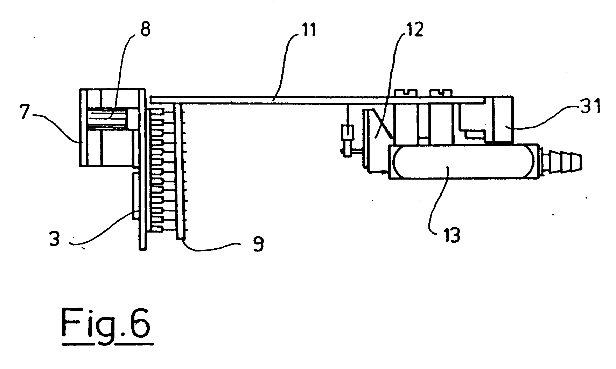

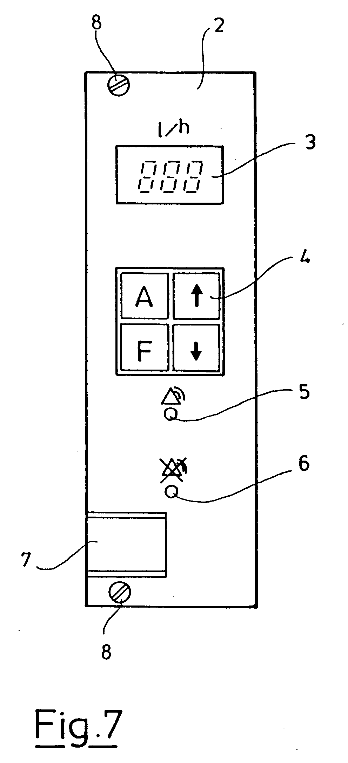

Jede der Strömungsmeßeinrichtungen 100.1, ... 100.n hat einen in den Figuren 4 bis 7 dargestellten Aufbau. Wie insbesondere Fig. 4 zeigt, ist ein Mikrobrückenluftstromsensor 12 über einen Komparator 40.2 mit einer Mikrorechnereinheit 41 verbunden. Der Komparator 40.2 ist über die Mikrorechnereinheit 41 über einen Integrator 40.1 ansteuerbar. Zwischen der Mikrorechnereinheit und einem Zwei-Draht-Bussystem BUS ist eine Schnittstelle mit Potentialtrennung 42 angeordnet. Das Zwei-Draht-Bussystem BUS ist mit einer Überwachungseinrichtung ÜE verbunden. An der Mikrorechnereinheit 41 ist eine Speichereinheit 43 angeschlossen, in der Korrekturkoeffizienten abgespeichert sind. Die Korrekturpolynome befinden sich in der Mikrorechnereinheit 41. Ebenfalls an der Mikrorechnereinheit 41 ist eine Meldeeinheit 44 angeschlossen. Sie umfaßt insbesondere eine dreistellige LCD-Anzeige 3, ein Alarmtastenfeld 4 und eine Alarmanzeige 5. Insbesondere der Spannungs-Zeit-Wandler 40, die Mikrorechnereinheit 41, die Schnittstelle mit Potentialtrennung 42 und die Speichereinheit 43 sind auf einer Sensorplatine 11 angeordnet.

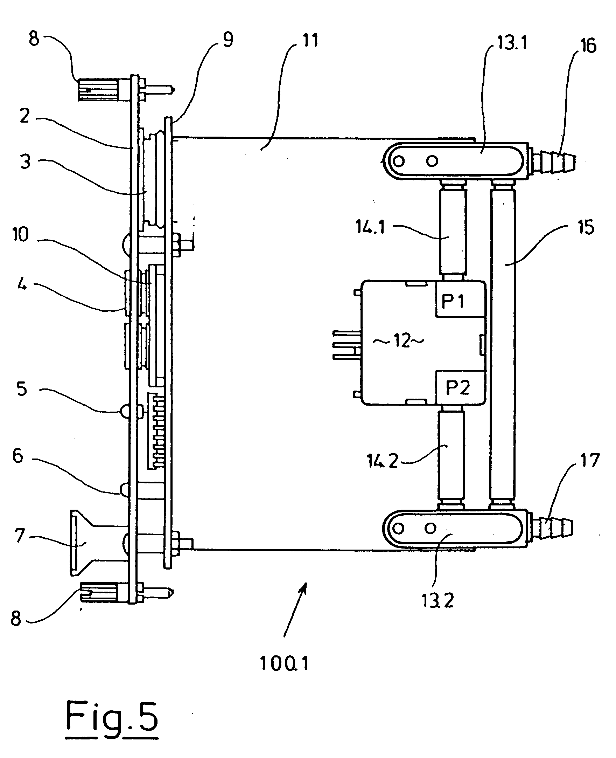

Wie insbesondere Figuren 5, 6 und 7 zeigen, ist mit der Sensorplatine 11 jeweils ein Luftverteilungsstück 13.1 und 13.2 verbunden. Jedes der Luftverteilungsstücke 13.1 und 13.2 ist eine F-Tülle, die an einer Seite jeweils einen Anschluß 16 bzw. 17 trägt. Zwischen den Verteilungsstücken 13.1 und 13.2 ist der Mikrobrückenluftstromsensor 12 angeordnet. Er ist mit ihnen am Anschluß P1 bzw. P2 jeweils über ein Rohrstück 14.1 bzw. 14.2 verbunden. Parallel zum Mikrobrückenluftstromsensor liegt ein Rohrbypaß 15, der Rohrbypaß 15 ist an den oberen Anschlüssen der F-Tüllen aufgesteckt. Die Funktion des Mikrobrückenluftstromsensors 12 basiert auf einem abgewandelten Hitzdraht-Anemometer, wobei einem Strömungskanal mit bekanntem Querschnitt jeweils ein Permalloy-Widerstand, vor und hinter dem Heizelement angeordnet, zu einer Meßbrücke verschaltet ist. Während herkömmliche Aufnehmer mit Wärmetransport im Luftstrom eine Heizleistung von 3 - 4 Watt pro Meßelement benötigen, schafft der hier verwendete Sensor mit einer Leistung von etwa 10 mW eine Mikrobrückentemperatur, die um 160° C über der Chiptemperatur liegt. Die komplette Meßbrücke ist in Dünnschichttechnik auf einer geätzten Mikrostruktur eines Silizium-Chips aufgebaut. Hierdurch ist es möglich, eine sehr miniaturisierte Realisierung des Mikrobrückenluftstromsensors zu realisieren. Auf der anderen Seite der Sensorplatine 11 ist eine Anzeige- und Tastenplatine 9 bzw. 10 angebracht. Auf einer davorliegenden Frontplatte 2 sind die LCD-Anzeige 3, die die Flußmenge in Liter pro Stunde dreistellig anzeigt, das Alarmtastenfeld 4, das aus vier Tasten zur Programmierung eines Alarmgrenzwertes und einer Alarmfreischaltung dient, die Alarmanzeige 5 und 6, die bei Überschreitung des programmierten Wertes aufleuchten bzw. die bei einer Quittierung eines Alarms blinken, wenn der Alarm quittiert wurde, der Grenzwert jedoch noch nicht überschritten worden ist, Griffe 7 sowie entsprechende Befestigungsschrauben 8. Hierdurch entsteht, wie aus den Figuren 5 bis 7 hervorgeht, ein Einsteckmodul.

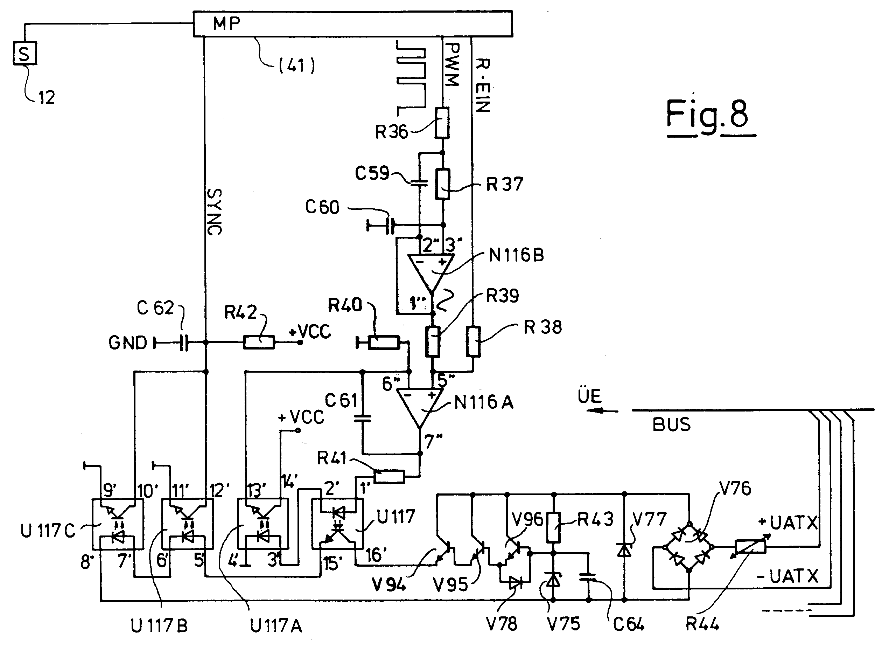

Eine Realisierungsmöglichkeit der Zusammenschaltung des Mikrobrückenluftstromsensors 12 mit der Mikrorechnereinheit 41, der Schnittstelle mit Potentialstellung 42 und einem Zwei-Draht-Bussystem BUS ist in Fig. 8 dargestellt. Dabei ist das Zwei-Draht-Bussystem BUS sowohl über einen PTC-Widerstand R44 als auch direkt mit den Punkten einer Gleichrichter-Brücken-Schaltung V76 verbunden. Parallel zu den anderen beiden Brückenzweigen ist eine Zenerdiode V77 und die Reihenschaltung eines Widerstandes R43 und einer Zenerdiode V75, zu der parallel ein Kondensator C64 liegt, angeordnet. Davor sind drei Transistoren V94, V95 und V96 angeschlossen, deren Kollektoren mit dem Widerstand R43 verbunden sind. Zwischen Emitter und der Basis des Transistors V96 ist ein Gleichrichter V78 angeordnet. Außerdem ist der Emitter des Transistors V96 mit der Basis des Transistors V95 und der Emitter des Transistors V95 mit der Basis des Transistors V94 verbunden. Der Emitter des Transistors V94 liegt am Eingang 16' des Optokopplers U117. Dieser Optokoppler ist mit seinem Anschluß 1' über einen Widerstand R41 mit einem Ausgang 7'' eines Operationsverstärkers N116A verbunden. Am nichtinvertierenden Eingang 5'' ist über einen Widerstand R39 über einen Ausgang 1'' ein weiterer Operationsverstärker N116B angeordnet. Am nichtinvertierenden Eingang 3'' ist in einer PWM-Leitung PWM ein Widerstand R36 und ein Widerstand R37 geschaltet. Zwischen beiden Widerständen R36 und R37 ist ein Kondensator C59 auf den invertierenden Eingang 2'' des Operationsverstärkers N116B geführt. Dieser Eingang 2'' ist ebenfalls mit dem Ausgang 1'' des Operationsverstärkers N116B verbunden. Darüber hinaus ist zwischen dem Widerstand R39 und dem nichtinvertierenden Eingang 5'' des Operationsverstärkers N116A ein Widerstand R38 in eine Steuerstromleitung R-EIN geschaltet. Der invertierende Eingang 6'' des Operationsverstärkers N116A führt zu einem an Null-Potential liegenden Widerstand R40, über einen Kondensator C61 an den Ausgang 7'' und zu einem Anschluß 13' des Optokopplers U117A, dessen Anschluß 14' an einem Potential +VCC liegt. Dessen Anschluß 3' ist mit dem Anschluß 2' des Optokopplers U117 verbunden, während der Anschluß 4' an die ein Null-Potential bildende Masse geführt ist. Zum Anschluß 15 des Optokopplers U117 führt eine Verbindung zum Anschluß 5 des Optokopplers U117B, dessen Anschluß 6' zum Anschluß 7' eines Optokopplers U117C führt. Der Anschluß 8' des Optokopplers U117 führt an die Zenerdiode V75, den Kondensator V64, die Zenerdiode V77 und die Gleichrichter-Brückenschaltung V76. Während die Ausgänge 11 und 9 der Optokoppler U117B und U177C an die Null-Potential führende Masse gelegt sind, sind die Anschlüsse 10' und 12' sowohl über einen Kondensator C62 an Masse als auch über einen Widerstand R42 an Potential und eine SYNC-Leitung SYNC geführt. Die Steuerleitung R-EIN, die PWM-Leitung PWM und die SYNC-Leitung SYNC sind mit einer Mikroprozessoreinrichtung MP verbunden. An diese Mikroprozessoreinrichtung MP, die die bereits erwähnte Mikrorechnereinheit 41 ist, ist der Sensor 12 angeschlossen. Jeder der Optokoppler U117, U117A, U117B und U117C bestehen aus einem Transistor und einer Diode, die als Fototransistor und als Fotodiode bekannterweise zusammen angeordnet und zusammenwirken.

An das Zwei-Draht-Bussystem BUS können bis 127 Strömungsmeßeinrichtungen mit Mikrobrückenluftstromsenor 100.1, ... 100.n parallel angeschlossen werden, die in einem Zeitmultiplexverfahren ihre Meßergebnisse übertragen. Die Meßwertübertragung erfolgt dabei mit Hilfe eines Wechselstroms, dessen Frequenz die Meßgröße darstellt. Der Wechselstrom wird dem Zwei-Draht-Bussystem entnommen. Die Übertragung der Frequenzen erfolgt im Zeitmultiplexverfahren. Dazu wird jedem der Strömungsmeßeinrichtungen mit Mikrobrückenluftstromsensor 100.1, ... 100.n eine andere Adresse zugeordnet, die den Zeitpunkt der Übertragung (Zeitfenster) definiert. Die Länge eines Zeitfensters wird mit einer bestimmten Zeitdauer, z.B. zwei Sekunden, bestimmt. Danach beträgt der Beginn des Zeitfensters Adresse x Zeitdauer. Die Synchronisation aller Strömungsmeßeinrichtungen mit Mikrobrückenluftstromsensor 100.1, ... 100.n wird durch ein Anlegen einer Spannung UATX ausgelöst.

Jede der Strömungsmeßeinrichtungen mit Mikrobrückenluftstromsensor 100.1, ... 100.n verursacht einen Strom in dem Zwei-Draht-Bussystem BUS. Dabei wird unterschieden:

a) Zählstrom,

das ist der Strom, der von jedem Sensor S1, .. .Sn verursacht wird, wenn er nicht sendet. Er addiert sich entsprechend der Anzahl der Strömungsmeßeinrichtungen mit Mikrobrückenluftstromsenor 100.1,... 100.n und verursacht einen Spannungsabfall auf dem Zwei- Draht-Bussystem BUS und begrenzt u.a. die Reichweite. Er sollte möglichst klein sein, z.B. zwischen 50 und 200 µA je Schnittstellenheit.

b) Sendestrom,

er tritt nur während des oben beschriebenen Zeitfensters auf und setzt sich zusammen aus einem Gleichstromanteil und einem Wechselstromanteil. Der Gleichstromanteil kann nur in bestimmten Fällen zur Stromversorgung des Sensors genutzt werden. Der Wechselstromanteil hingegen stellt die Meßgröße dar. Der Sendestrom wird dem Zwei-Draht-Bussystem entnommen und tritt immer im Zeitfenster nur einmal auf.

Bei Strömungsmeßeinrichtungen mit Mikrobrückenluftstromsensor 100.1, ... 100. n, bei denen der Gleichstromanteil des Sendestroms nicht zur Versorgung der Elektronik ausreicht, muß eine zusätzliche Spannungsversorgung vorgesehen werden. Die Spannungsversorgungen für die Strömungsmeßeinrichtungen mit Mikrobrückenluftstromsensor können alle auf unterschiedlichen Potentialen liegen und dürfen deshalb nur über eine Potentialtrennung mit dem 2-Draht-BUS verbunden werden. Hierzu bildet der Operationsverstärker N116A eine spannungsgesteuerte Stromquelle, dessen Ausgangsstrom durch die Dioden der Optokoppler U117 und U117A geleitet wird. Die Spannung am Anschluß 6 des Optokopplers U117B folgt der Spannung am Anschluß 5. Der Strom durch den Widerstand R40 beträgt damit

$$I40 = \frac{U}{R40}.$$

Der Strom durch den Widerstand R41 ist nicht linear, weil der Optokoppler U117A einen nichtlinearen Stromwandler darstellt. Der nichtlineare Strom durch R41 wird durch den Optokoppler U117 übertragen und erscheint linear am Ausgang, wenn er die gleiche Nichtlinearität besitzt wie U117A. Dies ist hinreichend gegeben, weil sich alle vier Optokoppler U117, U117A, U117B und U117C in einem integrierten Schaltkreis befinden und außerdem die Spannung am Kollektor von U117 mit Hilfe des durch V75, V76, V77, V78, V94, V95, R43, R44, C64 so groß gewählt ist, wie die Spannung am Kollektor des Optokopplers U117A. Mit Hilfe dieses so beschriebenen Schaltungsteils der Schnittstellenanordnung können also Ströme übertragen werden. Dieses Teil stellt somit eine spannungsgesteuerte, potentialfreie Stromsenke dar.

Das Tiefpaßfilter, das durch den Operationsverstärker N116B, die Widerstände R36 und R37 sowie die Kondensatoren C59 und C 60 gebildet wird, wandelt eine Pulsweiten modulierte Spannung in eine sinusförmige Spannung mit der Frequenz zwischen 1000 - 2000 Hz um, die über den Widerstand R39 an die durch den Operationsverstärker N116A gebildete Stromquelle geleitet wird. Mit Hilfe der Widerstände R38 und R 39 wird eine Gleichspannung am Anschluß 5 des Optokopplers N116A erzeugt, deren Größe den Zählstrom definiert. Die PWM-Leitung PWM hat dann das Potential +VCC und die Ruhestromleitung R-EIN das Potential GND.

Mit den Optokopplern U117B und U117C wird erkannt, ob der Zählstrom fließt, also UATX aufgeschaltet ist. Deren Dioden sind in Reihe geschaltet, während deren Kollektoren paralell geschaltet sind. Daraus ergibt sich eine größere Empfindlichkeit. Da alle Optokoppler U117, U117A, U117B und U117C zu einem integrierten Schaltkreis gehören, ergibt sich eine gut Fehlerkompensation auch bezüglich von Temperaturfehlern.

Der Brückengleichrichter V76, die Zenerdiode V77, der Kondensator C64, die Zenerdiode V75 und die Diode V78, der Widerstand R43 und die Transistoren V94, V95 und V96 bilden ein Netzteil. Der PTC-Widerstand R44 dient dabei als Kurzschlußschutz, der Brückengleichrichter V76 als Verpolungsschutz, die Zenerdiode V77 im Zusammenwirken mit R44 und dem Brückengleichrichter V76 als Überspannungsschutz. Die Spannungsreferenz wird aus der Zenerdiode V75, dem Widerstand R43 und dem Kondensator C64 gebildet. Die Transistoren V94 bis V96 sind als Emitterfolger geschaltet.

Die Mikroprozessoreinheit MP (41) kann deshalb potentialfrei Meßergebnisse von den Sensoren auf das Zwei-Draht-Bussystem übertragen. Das ist nur deshalb möglich, weil die Schnittstelle 42 eine Potentialtrennung mit folgenden Eigenschaften vornimmt:

1. Erkennung der Aufschaltung der Sychronisationsspannung UATX bei möglichst kleinem Zählstrom, und

2. Übertragung des Wechselstromanteils des Sendestroms mit konstanter Amplitude und geringem Klirrfaktor.

3. Im Gegensatz zu einer Transformatorkopplung ist nicht nur eine Übertragung der Wechselströme vom Sensor zur Überwachungseinheit, sondern in Gegenrichtung eine Übertragung der Synchronisationsgleichspannung möglich.

Durch die Optokoppler ergeben sich darüberhinaus folgende Vorteile:

- genaueste Übertragungsmöglichkeit kleinster Ströme (ca. 5,0 mA), da starke Unlinearitäten der Optokoppler, z.B. aufgrund von Temperaturfehler der Optokoppler-Halbleiter im Gesamtsystem, über den Optokoppler U117A kompensiert werden und

- bidirektionale galvanische Trennung vom Zwei-Draht-Bussystem.

Mit dieser potentialtrennenden Sensorschnittstelle ist es möglich, Meßwerte zu einer bis zu 100 km weit entfernten Überwachungseinheit zu übertragen. Sie ist in der Lage, mit Hilfe der von der Überwachungseinheit aufgeschalteten Synchronisationsspannung (UATX = 20 ... 120V), einen den Meßwert repräsentierenden sinusförmigen Modulationsstrom (typisch: iss = 3,64mA, f = 1000 ...2000 Hz) fließen zu lassen. Außerdem ist sie in der Lage, einen Ruhestrom, auch Zählstrom genannt, (typisch: I = 0,2 mA, DC) einzustellen, mit dessen Hilfe das Aufschalten der Synchronisationsspannung und somit der Beginn des Zeitmultiplexens erkannt wird.

Nur durch die Kombination mehrerer Maßnahmen ist es möglich, einen so kleinen Strom exakt mit Optokopplern einzustellen bzw. zu erkennen. Zu den Maßnahmen gehören:

a) Linearisierung der Optokopplerkennlinien und Minimierung der Temperaturfehler der Optokoppler U117 bis U117C. (Diese Maßnahme ist nicht nur wegen des sinusförmigen Modulationsstromes wichtig, sondern auch zur korrekten Einstellung und Erkennung des Ruhestromes von Bedeutung).

b) Vergrößerung der Empfindlichkeit durch die Reihenschaltung der Optokopplerdioden U117B und U117C sowie die Parallelschaltung der entsprechenden Fototransistoren.

c) Stabilisierung der Synchronistionsspannung mit einem Metzteil V 94, ... R44 von 20 ... 120V auf die gleiche Spannungshöhe wie Vcc (ca. 10V), damit sich auf beiden Seiten für die Fototransistoren gleiche Spannungsverhältnisse zwischen Kollektor und Emitter ergeben.

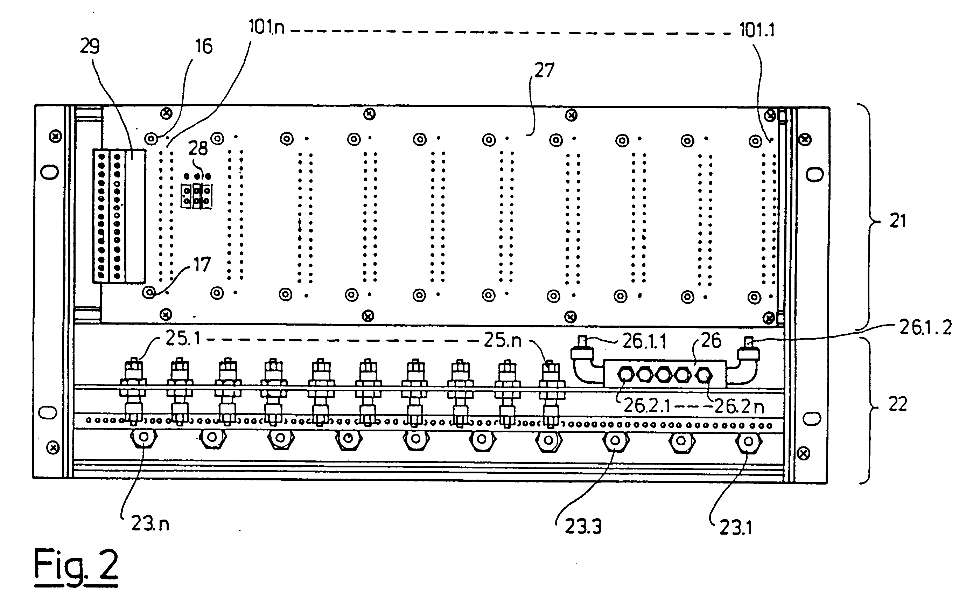

Die Strömungsmeßeinrichtungen in Form der beschriebenen Module werden, wie insbesondere die Figur 1 zeigt, in ds Einschubteil 21 geschoben. Hier befindet isch, wie aus Figur 2 ersichtlich, die Rückwand eines Bussystems, das ein Zwei-Draht-Bussystem BUS enthält, zur elektrischen Verbindung für die einzelnen strömungsmeßeinrichtungen mit einem Gerätestecker 29 und einem Buscodierstecker 28. Wesentlich ist, daß

a) eine automatische Adreßzuordnung für die einzelnen Steckplätze 101.1, ... 101.n über Steckverbinder 31 vorgenommen wird und

b) die Anschlüsse für die Druckluft 16 und 17 durch das Bus-System hindurchgehen.

Mit dem Buscodierstecker 28 ist eine Adreßcodierung für eine Kaskadierung von 1 bis 8 Baugruppenträgern möglich. Über den Gerätestecker 29 ist die Möglichkeit für den Anschluß entsprechender Verbindungen und Versorgungsanschlüsse gegeben. Wesentlich ist, daß im Pneumatikteil 22 eine Druckluftverteilung 26 angeordnet ist. Sie weist Eingänge 26.1.1 und 26.1.2 und Ausgänge 26.2.1, ... 26.2.n auf. Hierdurch ist es möglich, über die Eingänge 26.1.1 und 26.1.2 eine stabile Verbindung zu einer Druckluftanlage herzustellen. Über die Ausgänge 26.2.1, ... 26.2.n sind die einzelnen Strömungsmeßeinrichtungen 100.1, ... 100.n über Pneumatikschlater 23.1, ... 23.n mit dem Anschluß 16 verbindbar. Von ihrem Anschluß 17 wird dann eine Verbindung zu Druckluftabgängen 25.1, ... 25.n hergestellt, an den die Verbraucher angeschlossen sind. Auf der Frontseite befinden sich Pneumatikschalter 23, über denen eine Beschriftungsleiste 24 angeordnet ist. Durch diese besondere Ausgestaltung der Baugruppe ist eine sichere Überwachung einer Vielzahl von Verbrauchern möglich.

Im folgenden wird das Prinzip der Anlage erläutert:

Die von einer Druckluftanlage ankommende Luft wird über die Druckluftverteilung 26 auf die einzelnen Strömungsmeßeinrichtungen 100.1, ... 100.n verteilt. Dabei strömt die ankommende Luft in das Luftverteilungsstück 13.1 und durchströmt sowohl das Rohrverbindungsstück 14.1, den Mikrobrückenluftstromsensor 12, und das Rohrverbindungsstück 14.2 sowie den dazu parallel liegenden Rohrbypaß 15, um danach über das Rohrverteilungsstück 13.2 und die Druckluftabgänge 25.1, ... 25.n an die Verbraucher zu gelangen. Hierbei gibt der Mikrobrückenluftstromsensor 12 eine Spannung ab. Der vor ihm liegende Integrator 40.1 wird durch die Mikrorechnereinheit 41 gestartet und erzeugt eine Spannungsrampe, vorzugsweise 0 bis 10 V. Der Komparator 40.2 vergleicht die Sensorspannung mit der Rampenspannung. Das erzeugte Ausgangssignal wird entsprechend gewechselt, wenn die Rampenspannung größer als die Sensorspannung ist. Das Ausgangssignal wird dann von der Mikrorechnereinheit 41 verarbeitet. Im Zusammenspiel mit dem Integrator 40.1 wird die von dem Mikrobrückenluftstromsensor abgegebene Spannung durch eine Zeitmessung ermittelt, die mit dem Starten des Integrators 40.1 beginnt und mit dem Kippen des Komparators 40.2 endet. Nachdem durch die Mikrorechnereinheit 41 die Messung der Spannung des Mikrobrückenluftstromsensors vorgenommen worden ist, erfolgt in ihm eine Linearisierungsberechnung der Meßwerte mittels Korrekturpolynome und Koeffizienten. Die Koeffizienten sind im Speicher 43 abgelegt. Durch die Mikrorechnereinheit erfolgt darüber hinaus eine Übertragung der Meßwerte über die Schnittstelle 42 mit Potentialtrennung auf das Zwei-Draht-Bussystem BUS nach Anforderung eines Überwachungsrechners. Dabei wird die von dem Überwachungsrechner gestartete Zeitmultiplexübertragung ausgeführt, die für ein Senden des Signal im sich ergebenden Zeitfenster erforderlich ist. In der Speichereinheit sind darüber hinaus Grenzwerte und Werte für die Freischaltung eingespeichert, die bei der Überwachung der einzelnen Verbraucher durch die Mikrorechnereinheit 41 berücksichtigt werden. Die in der Speichereinheit 43 abgelegte Alarmgrenze wird mit der Tastatur des Alarmtastenfelds 4 eingestellt und durch die Alarmanzeigen 5 und 6 quittiert. Der jeweils aktuelle Meßwert jeder Strömungsmeßeinrichtung kann darüber hinaus zusätzlich in eine Monitoring-Anlage, die z. B. in der Überwachungseinheit ÜE angeordnet sein kann, eingelesen werden. Hierdurch ist es möglich, daß eine bis zu zehn Strömungsmeßeinrichtungen nebeneinander in der Baugruppe betrieben werden können, wobei jede Strömungsmeßeinrichtung 100.1, ... 100.n für sich allein funktionsfähig ist. Die Adressierung der einzelnen Strömungsmeßeinrichtungen 100.1, ... 100.n zur Monitoring-Auslesung erfolgt durch die Codierung des jeweiligen Steckplatzes 101.1, ... 101.n an der Busrückwand automatisch mit einer Zuordnung von 1 bis 10. Werden mehrere solcher Zehnerblök-ke in einem Schrank betrieben, so müssen diese durch eine 3-Bit-Steckcodierung aus der Busrückwand codiert werden. Mit 3-Bit ist eine binäre Kennzeichnung von 0 - 7 möglich. Das bedeutet, daß theoretisch maximal 8 Einschübe 80 Steckermodule in einem Schrank betrieben werden können.

Will man an einem Verbraucher, z. B. einem Druckluftkabel, Reparaturen ausführen und verhindern, daß durch die Arbeiten ein Alarm ausgelöst wird, so ist das durch eine Betätigung der Quittierungstaste in der Alarmanzeige 6 möglich. Ohne daß ein Alarm ansteht, wird im Voraus der Summenalarmkontakt inaktiv geschaltet, so daß dieser Zustand durch die Alarmanzeige wie folgt angezeigt wird:

- blinken, solange kein Alarm ansteht,
- Dauerleuchten, sobald ein Alarm auftritt.

**Patentansprüche**

1. Vorrichtung zur Strömungsmessung in Druckluftanlagen,
   - wobei die Druckluft an zwei Drucklufteingänge (26.1.1, 26.1.2) einer Druckluftverteilung (26) geführt und über deren Druckluftausgänge (26.2.1, ... 26.2.n) an Anschlußeingänge (16) von Strömungs-meßeinrichtungen mit Mikrobrückenluft-stromsensor (100.1, ... 100.n) mit gleichem Druck verteilbar ist,
   - wobei die Druckluft nach Messung ihrer jeweiligen Strömungsmenge in den Strö-mungsmeßeinrichtungen mit Mikrobrük-kenluftstromsensor (100.1, ... 100.n) an mit deren Anschlußausgängen (17) verbundenen Druckluftabgängen (25.1, ... 25.n) ansteht und
   - wobei die Strömungsmeßeinrichtungen mit Mikrobrückenluftstromsensor (100.1, ... 100.n) über ein Bussystem (BUS) mit einer Überwachungseinheit (ÜE) verbunden sind, über das die Meßergebnisse der Strömungsmeßeinrichtungen mit Mikrobrückenluftstromsensor (100.1, ... 100.n) übertragbar sind.

2. Vorrichtung nach Anspruch 1, dadurch gekennzeichnet, daß die Meßergebnisse der Strö-mungsmeßeinrichtungen mit Mikrobrückenluft-stromsensor (100.1, ... 100.n) mit einem Kontrollrechner mit einer zugeteilten Adresse abfragbar sind.

3. Vorrichtung nach Anspruch 1 und 2, dadurch gekennzeichnet, daß die Adressen für Strömungsmeßeinrichtungen mit Mikrobrückenluftstromsensor (100.1, ... 100.n) in Steckplätzen (101.1, ... 101.n) fest eingegeben sind.

4. Vorrichtung nach wenigstens einem der Ansprüche 1 bis 3, dadurch gekennzeichnet, daß die Anschlüsse (16; 17) der Strömungsmeßeinrichtungen mit Mikrobrückenluftstromsensor (100.1, ... 100.n) durch die Rückwand des Bussystems (BUS) geführt sind.

5. Vorrichtung nach wenigstens einem der Ansprüche 1 bis 4, dadurch gekennzeichnet, daß jedem Bus eine Adreßcodierung (28) für eine Kaskadierung von 1 bis 8 einstellbar zugeordnet ist.

6. Strömungsmeßeinrichtung mit
   - einem Mikrobrückenluftstromsensor (12),
   - zwei Anschlußbereichen (13.1, 13.2) und
   - Strömungskanälen (14.1, 14.2, 15), durch die die Druckluft über die Anschlußbereiche (13.1, 13.2) hindurchströmt und mit Hilfe des Mikrobrückenluftstromsensors (12) eine Strömungsmessung in Druckluftanlagen durchführbar ist,
   dadurch gekennzeichnet,
   - daß die zwei Anschlußbereiche als sich gegenüberliegende Luftverteilungsstücke (13.1; 13.2) und die Strömungskanäle als zwei Rohrverbindungsstücke (14.1; 14.2) und ein Rohrbypaß (15) ausgebildet sind, wobei die Rohrverbindungsstücke (14.1; 14.2), zwischen denen der Mikrobrückenluftstromsensor (12) angeordnet ist, und der parallel zu dem Mikrobrückenluftstromsensor (12) liegende Rohrbypaß (15) mit den sich gegenüberliegenden Luftverteilungsstücken (13.1; 13.2) verbunden sind, und
   - daß der Mikrobrückenluftstromsensor (12) mit einer Mikrorechnereinheit (41) verbunden ist, die
   a) mit Hilfe eines zwischen dem Mikro-brückenluftstromsensor (12) und der Mi-krorechnereinheit (41) liegenden Span-nungs-Zeit-Wandiers (40) eine Sensorspannung in einen digitalen Meßwert so umwandelt, daß sich ein proportionaler Zusammenhang zwischen Sensorspannung und Meßwert ergibt,
   b) eine Korrektur des Meßwertes durch digitale Verarbeitung mit eingespeicher-ten Korrekturpolynomen und dazugehöri-gen Korrekturkoeffizienten vornimmt und
   c) eine Schnittstelle mit Potentialtrennung (42), die zwischen der Mikrorechnereinheit (41) und einem Bussystem (BUS) angeordnet ist, ansteuert und über sie die Meßwerte auf das Bussystem (BUS) überträgt.

7. Strömungsmeßeinrichtung nach Anspruch 6, dadurch gekennzeichnet, daß der Spannungs-Zeit-Wandler (40) aus einem von der Mikrorechnereinheit (41) startbaren Integrator (40.1) und einem mit ihm verbundenen Komparator (40.2) besteht, womit die vom Mikrobrückenluftstromsensor (12) abgegebene Spannung wie folgt umwandelbar ist:

- nach dem Starten steigt die Ausgangsspannung des Integrators (40.1) an und erzeugt eine Rampenspannung,
- der Komparator (40.2) vergleicht die Rampenspannung mit der Sensorspannung und kippt, wenn die Rampenspannung größer als die Sensorspannung ist,
- so daß sich ein proportionales Verhältnis zwischen der Sensorspannung und einem Zeitfenster ergibt, welches mit dem Starten des Integrators (40.1) beginnt und dem Kippen des Komparators (40.2) endet.

8. Strömungsmeßeinrichtung nach Anspruch 6 oder 7, dadurch gekennzeichnet, daß an der Mikrorechnereinheit (41) eine Speichereinheit (43), in der die Korrekturkoeffizienten abgespeichert sind, angeordnet ist.

9. Strömungsmeßeinrichtung nach wenigstens einem der Ansprüche 6 bis 8, dadurch gekennzeichnet, daß mit der Mikrorechnereinheit (41) eine Meldeeinheit (44) verbunden ist.

10. Strömungsmeßeinrichtung nach Anspruch 9, dadurch gekennzeichnet, daß die Meldeeinheit (44)

- eine dreistellige LCD-Anzeige (3),
- ein Alarmtastenfeld (4) und
- eine Alarmanzeige (5)

aufweist.

11. Strömungsmeßeinrichtung nach wenigstens einem der Ansprüche 6 bis 10, dadurch gekennzeichnet, daß die Luftverteilungsstücke (13.1; 13.2) als F-Tüllen ausgebildet sind.

12. Strömungsmeßeinrichtung nach wenigstens einem der Ansprüche 6 bis 11, dadurch gekennzeichnet, daß

- der Spannungs-Zeit-Wandler (40),
- die Mikrorechnereinheit (41),
- die Schnittstelle mit Potentialtrennung (42) und
- die Speichereinheit (43)

auf einer Sensorplatine (11) zusammengefaßt und angeordnet sind.

13. Anordnung zur Meßwertübertragung zwischen Mikrobrückenluftstromsensoren und einer Überwachungseinheit mit einem ersten Operationsverstärker (N116A), dessen Ausgangsstrom durch die Dioden eines ersten und eines zweiten Optokopplers (U117, U177A) an Masse (GND) geleitet ist und dessen invertierender Eingang (6'')

am Emitter des Transistors des zweiten Optokopplers (U117A), dessen Kollektor an Potential (+VCC) geführt ist,

an einem ersten an Masse (GND) liegenden Widerstand (R40) und

an einem ersten Kondensator (C61), der zu einem Ausgang (7'') führt, angeordnet ist, dadurch gekennzeichnet,

daß der nichtinvertierende Eingang (5'') des ersten Verstärkers (N116A) über einen zweiten Widerstand (R39) und ein Tiefpaßfilter (N116B, R36, R37, C59, C60) an eine Signalleitung (PWM) und über einen dritten Widerstand (R38) an eine Steuerleitung (R-EIN) geführt ist,

daß der Emitter des Transistors des ersten Optokopplers (U117) mit den in Reihe geschalteten Dioden eines zweiten und eines dritten Optokopplers (U117B, U117C) verbunden ist, deren Emitter an Masse (GND) und deren Kollektoren auf eine SYNC-Leitung (SYNC) geführt sind,

daß ein Bussystem (BUS) über ein Netzteil (V75, V76, V77, V78, V94, V95, V96, R43, R44, C64) an Kollektor des Transistors des ersten Optokopplers (U117) und am Ausgang der Diode des vierten Optokopplers (U117C) liegt und mit einer Synchronisationsspannung (UATX) beaufschlagt ist,

daß an einer Mikrorechnereinrichtung (MP) der Mikrobrückenluftstromsensor (12), die SYNC-Leitung (SYNC), die Signalleitung (PVM) und die Steuerleitung (R-EIN) angeordnet sind und mit der Mikrorechnereinrichtung (MP)

a) der Mikrobrückenluftstromsensor (12) abgefragt wird und ein Meßwert mit einer pulsweiten-modulierten Spannung im Zeitfenster entsprechend seiner zugeordneten Adresse auf die Signalleitung (PVM) gelegt wird und

b) anhand eines mit Hilfe des zweiten und des dritten Widerstandes (R39, R38) erzeugten Zählstroms über die SYNC-Leitung (SYNC) das Anliegen der Synchronisationsspannung (UATX) erkannt wird, so daß dem Bussystem (BUS) ein Sendestrom entnehmbar und als der die Meßgröße darstellende Wechselstromanteil des Meßwertes zur Überwachungseinheit (ÜE) übertragbar ist.

**14.** Anordnung nach Anspruch 13, dadurch gekennzeichnet, daß sich die vier Optokoppler (U117; U117A; U117B; U117C) in einem integrierten Schaltkreis befinden.

**15.** Anordnung nach Anspruch 13 oder 14, dadurch gekennzeichnet, daß zwischen dem Ausgang (7'') des ersten Operationsverstärkers (N116A) und dem ersten Eingang (1'') der Diode des ersten Optokopplers (U117) ein vierter Widerstand (R41) angeordnet ist.

**16.** Anordnung nach wenigstens einem der Ansprüche 13 bis 15, dadurch gekennzeichnet, daß zwischen dem Ausgang (7'') und dem invertierten Eingang (6'') des ersten Operationsverstärkers (N116A) ein zweiter Kondensator (C61) angeordnet ist.

**17.** Anordnung nach wenigstens einem der Ansprüche 13 bis 16, dadurch gekennzeichnet, daß an der SYNC-Leitung (SYNC) ein an Masse (GND) liegender zweiter Kondensator (C62) und ein an Potential (+VCC) liegender fünfter Widerstand (R42) angeordnet ist.

**18.** Anordnung nach wenigstens einem der Ansprüche 13 bis 17, dadurch gekennzeichnet, daß das Tiefpaßfilter aus einem zweiten Operationsverstärker (N116B) einem sechsten und einem siebente Widerstand (R36; R37) und einem dritten und einem vierten Kondensator (C59; C60) besteht, wobei
  - der sechste und der siebente Widerstand (R36; R37) in der PWM-Leitung (PWM) am nichtinvertierenden Eingang (3'') liegen,
  - der dritte Kondensator (C59) zwischen diesen beiden Widerständen (R36, R37) und dem invertierenden Eingang (2'') und
  - der vierte Kondensator (C60) am nichtinvertierenden Eingang (3'') des zweiten Operationsverstärkers (N116B) liegt,

wobei der invertierende Eingang (2'') zum Ausgang (1'') des zweiten Operationsverstärkers (N116B) führt, der mit dem vor dem invertierenden Eingang (5') des ersten Operationsverstärkers (N116A) liegenden zweiten Widerstand (R39) verbunden ist.

**19.** Strömungsmeßeinrichtung nach wenigstens einem der Ansprüche 6 bis 12 bzw. Anordnung zur Meßwertübertragung zwischen Mikrobrückenluftstromsensoren und einer Überwachungseinheit nach wenigstens einem der Ansprüche 13 bis 18, dadurch gekennzeichnet, daß derMikrobrückenluftstromsensor (12) ein abgewandeltes Hitzdraht-Anemometer ist, wobei im Strömungsrohr (14.1, 14.2) jeweils ein Permalloy-Widerstand vor und hinter einem Heizelement angeordnet und zu einer Meßbrücke verschaltet ist.

**20.** Strömungsmeßeinrichtung nach wenigstens einem der Ansprüche 6 bis 12, dadurch gekennzeichnet, daß die Mikrorechnereinrichtung (MP) die Mikrorechnereinheit (41) und die Anordnung zur Meßwertübertragung zwischen Mikrobrückenluftstromsensoren und einer Meßwertübertragungseinheit nach wenigstens einem der Ansprüche 13 bis 18 und 19 die Schnittstelle mit Potentialtrennung (42) ist.

**21.** Vorrichtung nach wenigstens einem der Ansprüche 1 bis 5 bzw.Strömungsmeßeinrichtung nach wenigstens einem der Ansprüche 6 bis 12 und 19 bis 20, bzw. Anordnung zur Meßwertübertragung zwischen Mikrobrückenluftstromsensoren und einer Überwachungseinheit nach wenigstens einem der Ansprüche 13 bis 19, dadurch gekennzeichnet, daß das Bussystem ein Zwei-Draht-Bussystem (BUS) enthält, mit dem die Meßwerte übertragbar sind.

Fig.1

Fig.2

# Fig.3

Fig.4

## Fig.5

# Fig.6

<u>Fig.7</u>

Fig.8

EP 0 621 464 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 180 540 (INGKO)<br>* Seite 10, Zeile 9 - Seite 12, Zeile 9; Anspruch 1; Abbildung 1 *<br>--- | 1,6,13 | G01F15/06 |
| A | US-A-4 918 995 (A.N.J. PEARMAN)<br>* Spalte 2, Zeile 48 - Spalte 10, Zeile 6; Abbildungen 1-9 *<br>--- | 1,6,13 | |
| A | DE-A-39 39 038 (H. HEMSCHEIDT)<br>* Spalte 1, Zeile 7 - Zeile 8 *<br>* Spalte 3, Zeile 2 - Zeile 24; Abbildung *<br>--- | 1,6,13 | |
| A | EP-A-0 458 995 (SIEMENS)<br>* Spalte 2, Zeile 27 - Spalte 5, Zeile 17; Abbildung *<br>--- | 1,6,13 | |
| A | PATENT ABSTRACTS OF JAPAN<br>vol. 9, no. 281 (P-403) (2004) 8. November 1985<br>& JP-A-60 123 733 (MITSUBISHI) 2. Juli 1985<br>* Zusammenfassung *<br>----- | 1,6,13 | **RECHERCHIERTE SACHGEBIETE (Int.Cl.5)**<br><br>G01F |

Der vorliegende Recherchenbericht wurde für alle Patentansprüche erstellt

| Recherchenort | Abschlußdatum der Recherche | Prüfer |
|---|---|---|
| DEN HAAG | 7. Juli 1994 | Heinsius, R |

EPO FORM 1503 03.82 (P04C03)